# EUROPÄISCHE PATENTSCHRIFT

(11) **EP 0 976 620 B1**
(45) Veröffentlichungstag und Bekanntmachung des Hinweises auf die Patenterteilung: **24.09.2003**
(21) Anmeldenummer: 99110968.7
(22) Anmeldetag: 09.06.1999
(51) Int. Cl.: B60R 21/13

(54) **Überrollbügel**
Roll-over bar
Arceau de sécurité

(30) Priorität: 23.07.1998 DE 29813152 U
(43) Veröffentlichungstag der Anmeldung: 02.02.2000
(73) Patentinhaber: Blechformwerke Bernsbach AG, 08315 Bernsbach (DE); ISE Innomotive Systems Europe GmbH, 51702 Bergneustadt (DE)
(72) Erfinder: Müller, Hartwig, Dr.-Ing., 09126 Chemnitz (DE); Schweier, Robert, Dipl.-Ing., 00221 Neukirchen (DE)
(74) Vertreter: Grünecker, Kinkeldey, Stockmair & Schwanhäusser Anwaltssozietät

(56) Entgegenhaltungen:
- EP-A- 0 233 777
- EP-A- 0 454 279
- WO-A-97/48506
- DE-A- 1 808 786
- FR-A- 1 539 482
- GB-A- 2 047 180
- US-A- 4 978 161

## Beschreibung

Die Neuerung betrifft einen Überrollbügel der im Oberbegriff des Anspruchs 1 angegebenen Art.

Der Überrollbügel bei einem Kraftfahrzeug dient dem Insassenschutz, ist aber bei einem offenen Sportwagen auch ein den ästhetischen Gesamteindruck beeinflussendes Gestaltungsmerkmal. Herkömmliche, über die Fahrzeugbreite durchgehende Überrollbügel sind Stahl- oder Leichtmetallrohrkonstruktionen oder Blechkasten-Schweißkonstruktionen, die ein erhebliches Zusatzgewicht bilden und eine unerwünscht hochliegende Masse darstellen. Ferner sind solche bekannte Überrollbügel meist aus fertigungstechnischen Gründen (Verwendung konstanter Querschnitte) für einzelne Belastungsfälle bei weitem überqualifiziert.

Ein gattungsgemäßer, aus EP-A-0 233 777 bekannter Überrollbügel mit der Gestalt eines umgekehrten Us ist eine Blechkastenkonstruktion hauptsächlich aus drei miteinander verbundenen, mit Längssicken geformten Profilen.

Ein aus GB-A-2 047 180 bekannter Überrollbügel mit der Gestalt eines umgekehrten Us besteht aus einem Querschenkel und zwei sich davon nach unten erstreckenden Hochschenkeln, die mit dem Querschenkel über Eckplatten verbunden sind. Jeder Hochschenkel besteht aus zwei spiegelbildlich aneinandergehafteten Blechprofilen mit Längssicken, die abwechselnd nach außen bzw. nach innen erhaben sind. Die Größe der Längssicken ist über die Länge der Hochschenkel gleichbleibend.

Ein aus DE-A-1 808 786 bekannter Überrollbügel, ist als Kastenträger ausgebildet, wobei seine aufrechten Abschnitte einstückig mit den Seitenwänden des Fahrzeuges sind, während das die aufrechten Abschnitte verbindende Querstück eingeschweißt ist. Sikkenförmige Ausdrückungen sind zur Versteifung eingeformt.

Ein aus FR-A-1 539 482 bekannter Uberrollbügel, ein sogenannter Targa-Bügel, besteht aus drei miteinander verbundenen Schalenkörpem aus Blech, von denen zwei mit abwechselnd nach außen bzw. innen erhabenen Längssicken geformt sind.

Der Erfindung liegt die Aufgabe zugrunde, einen fahrzeugüberspannenden Überrollbügel der eingangs genannten Art zu schalten, der leicht und für die einzelnen Belastungsarten optimal ausgebildet ist.

Die gestellte Aufgabe wird mit den Merkmalen des Anspruchs 1 gelöst.

Die abwechselnd nach innen bzw. außen erhabenen, über die Längserstreckung in etwa gerade durchgehenden, zu den Enden des Überrollbügels belastungsangepasst in ihrer Größe allmählich zunehmenden Längssicken des Schalen-Grundkörpers erbringen in dem quer zur Bügelhauptebene liegenden, flachen Querschnitt des Überrollbügels die notwendige Festigkeit für alle Belastungsarten. Die Schalenbauweise aus Faserbund-Kunststoff mit den für die Steifigkeit verantwortlichen Längssicken spart gegenüber herkömmlichen Überrollbügeln erheblich Gewicht und ermöglicht es, den Überrollbügel ästhetisch und gestalterisch günstig in die Fahrzeugkarosserie zu integrieren.

Zweckmäßige Ausführungsformen gehen aus den Unteransprüchen hervor.

Anhand der Zeichnung werden Ausführungsformen des Erfindungsgegenstandes erläutert. Es zeigen:
- Fig. 1: eine Perspektivansicht eines offenen Sportwagens mit einem Überrollbügel,
- Fig. 2: eine perspektivische Darstellung des Überrollbügels,
- Fig. 3 - 11: Querschnitte unterschiedlicher Ausführungsformen von Überrollbügeln, und
- Fig. 12 + 13: zwei weitere Detailvariationen eines solchen Überrollbügels mit einem Abriebschutz.

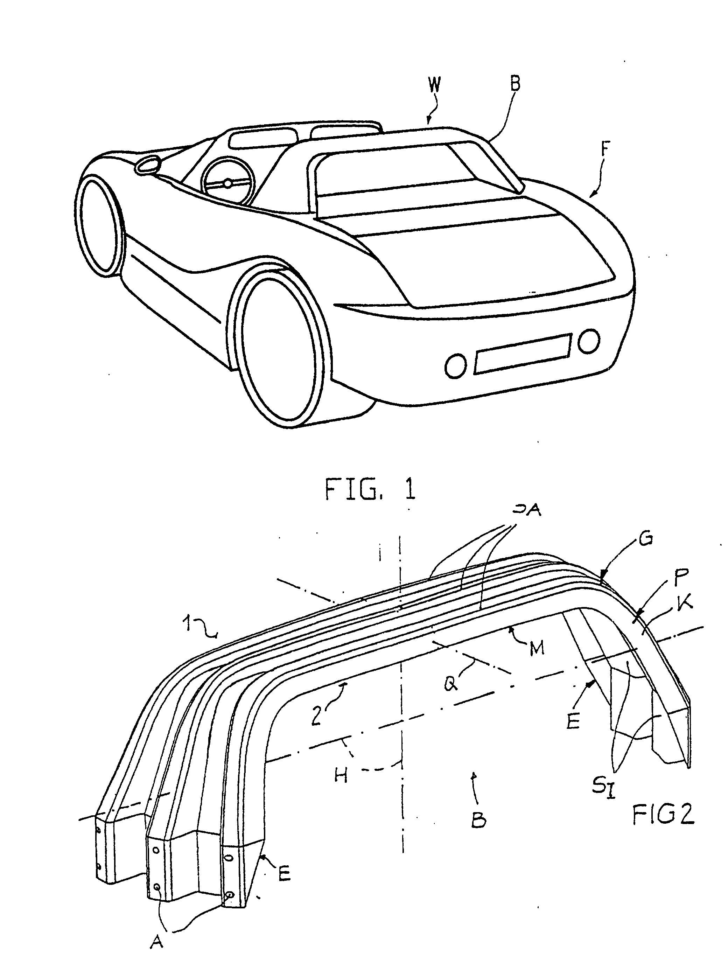

In Fig. 1 ist ein Kraftfahrzeug F, insbesondere ein offener Sportwagen, mit einem hinter den Sitzen in etwa die Fahrzeugbreite überspannenden, umgekehrt U-förmigen Überrollbügel B ausgestattet, der z.B. vollflächig verkleidet ausgeführt ist und eine Spoilerfunktion als Spoiler W übernimmt.

Der Überrollbügel B in Fig. 2 ist in Schalenbauweise aus Faserverbundkunststoff K und zweckmäßigerweise einstückig hergestellt. Als Material eignet sich insbesondere Faserverbundkunststoff K mit in Form von Prepregs in eine Kunststoffmatrix eingebetteten Gewebelagen mit Schuß- und Kettfäden (Glasfasern, Kohlenstoffasern, Aramidfaser oder Mischgeweben aus diesen Fasern). Zweckmäßigerweise ist der Überrollbügel B ein Preßformteil P, der einen in etwa geraden Mittelabschnitt M und von diesem nach unten abgebogene Endabschnitte E aufweist.

Der Überrollbügel B definiert mit seinem Mittelabschnitt M und den Endabschnitten E eine Bügelhauptebene H (angedeutet, durch strichpunktierte, sich schneidende Achsen), die im Fahrzeug quer zur Fahrzeuglängsrichtung orientiert ist. Der Überrollbügel B besitzt einen flachen Querschnitt mit einer Querschnittshauptachse Q, die annähernd senkrecht zur Bügelhauptebene H ausgerichtet ist. Zur Anpassung an die Kontur der Fahrzeugkarosserie kann die Querschnittshauptachse Q in den Endabschnitten E schräg gegenüber der Bügelhauptebene H ausgerichtet sein.

In Fig. 2 besteht der Überrollbügel B aus einem Schalen-Grundkörper G, vorzugsweise in einstückiger Schalenbauweise, der annähernd parallel zur Bügelhauptebene H eingeformte längsverlaufende Längssicken S_{A} und S_{I} aufweist. Die Sicken gehen über die gesamte Länge des Überrollbügels B durch. In den Endabschnitten E sind Befestigungsanschlüsse A zum Festlegen des Überrollbügels B im Fahrzeug F vorgeformt. Der Überrollbügel B kann fest in das Fahrzeug eingebaut, oder an nicht dargestellten Ausfahreinrichtungen ausfahrbar angebracht sein. Die Größe wenigstens einer der Längssicke nimmt in Richtung zu den Überrollbügelenden allmählich zu. Es sind mehrere Längssicken S_{A} eingeformt, die zur Bügelaußenseite 1 erhaben sind, und wenigstens eine Längssicke S_{I}, die zur Bügelinnenseite 2 erhaben ist. Die Längssicken können im Querschnitt gerundet oder vierkantig, zweckmäßigerweise mit gebrochenen Kanten geformt sein. Die Wandstärke des Schalengrundkörpers G aus fertigungstechnischen Gründen weitgehend gleichbleibend, könnte aber auch dem Momentenverlauf entsprechend angepaßt sein.

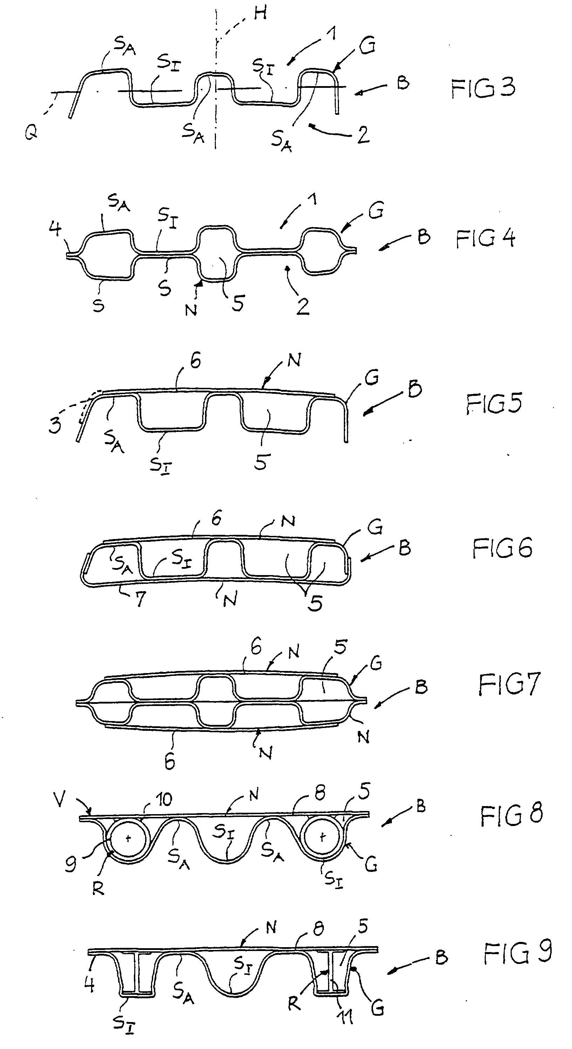

In den Fig. 3 bis 11 sind unterschiedliche Querschnittsformen des Überrollbügels B anhand von zur Bügelhauptebene H vertikalen Schnitten dargestellt.

Der Überrollbügel B in Fig. 3 weist in seinem Querschnitt und in Richtung der Querschnittshauptachse Q hintereinanderliegend in jedem Randbereich eine zur Bügelaußenseite 1 erhabene Längssicke S_{A} und eine mittlere, zur Bügelaußenseite 1 erhabene Längssicke S_{A}, sowie zwischen den zur Bügelaußenseite 1 erhabenen Längssikken S_{A} zwei zur Bügelinnenseite 2 erhabene Längssicken S_{I} auf. Die Weiten der Längssicken S_{I}, S_{A} werden so gewählt, daß das Widerstandsmoment des gesamten Querschnitts ein Maximum erreicht. Es ergibt sich ein Mäander-Querschnittsverlauf, wobei die außenliegenden Schenkel der äußeren Längssicken S_{A} an der Innenseite 2 zugewandten Rändern enden. Der Schalenkörper G mit der beschriebenen Querschnittskonfiguration ist ein Preßformteil aus Faserverbundkunststoff. Die beiden äußeren Längssicken S_{A} sind höher als die dazwischenliegende Längssicke S_{A}.

In dem Überrollbügel B in Fig. 4 ist der Schalengrundkörper G, z.B. gemäß Fig. 3, mit einem weiteren Schalenkörper N vereinigt, der einen in etwa um die Querschnittshauptachse Q spiegelbildlichen Querschnitt besitzt, so daß in dem Überrollbügel B längsdurchgehende Hohlkanäle 5 begrenzt werden. In anderen Worten ist der Schalenkörper N mit zu den Längssicken des Schalengrundkörpers G spiegelbildlichen Längssicken S geformt. Verbindungsflansche 4 lassen sich zum Verbinden (Verkleben oder Verschweißen) nutzen, wie auch die gegenseitigen weiteren Kontaktbereiche dieser zweischaligen Ausführung des Überrollbügels B.

Der Überrollbügel B in Fig. 5 ist von zweischaliger Bauweise, wobei auf den Schalen-Grundkörper G, etwa der Konfiguration von Fig. 3, allerdings mit etwas höherer mittelerer Längssicke, oberseitig ein Schalenkörper N aufgebracht ist, der als flächiges Substrat 6 ausgebildet ist und aus dem gleichen oder einem anderen Material (z.B. Metallblech) besteht wie der Schalen-Grundkörper G, der ein Faserverbundkunststoff-Preßformteil ist. Die seitlichen Ränder des Schalenkörpers N können weiter als gezeigt (gestrichelt bei 3 angedeutet) nach außen und unten gezogen sein, um einen Abriebschutz zu bilden.

In Fig. 6 ist der Schalen-Grundkörper G des Überrollbügels B mit einem äußeren Schalenkörper N entsprechend Fig. 5 und einem inneren Schalenkörper N kombiniert, der als annähernd U-förmiges Substrat 7 die der Bügelinnenseite zugewandte Unterseite des Schalen-Grundkörpers G abdeckt und seitlich außen (oder innen, nicht gezeigt) die äußeren Randbereiche des dazwischen gesetzten Schalen-Grundkörpers G abdeckt. Die Schalenkörper N können aus dem gleichen Material hergestellt sein, wie der Schalen-Grundkörper G, z.B. aus Faserverbundkunststoff, oder aus anderem Material, z.B. Metall bzw. Blech.

In Fig. 7 ist der Schalen-Grundkörper G des Überrollbügels B wie in Fig. 4 mit einem spiegelbildlich geformten Schalenkörper N kombiniert, und sind zusätzlich noch äußere und innere Schalenkörper N in Form weitgehend flacher Substrate 6 aufgebracht. Dadurch werden mehrere in Längsrichtung des Überrollbügels B durchgehende Hohlkanäle 5 geschaffen. Die einzelnen Komponenten des Überrollbügels B können aus gleichen oder verschiedenen Materialien bestehen. Beispielsweise könnte der äußere Schalenkörper N aus Metall bestehen, um einen verbesserten Abriebschutz für den Überrollbügel B zu erzielen.

In Fig. 8 hat der Schalen-Grundkörper G einen Querschnitt mit einem schlangenlinienförmigen Querschnittsverlauf mit zwei zur Bügelaußenseite erhabenen Längssicken S_{A}, die sich mit drei zur Bügelinnenseite erhabenen Längssicken S_{I} abwechseln, wobei in den Randbereichen des Querschnittes des Überrollbügels B halbe nach außen erhabene Längssicken verbleiben. An der Bügelaußenseite ist auf den Schalen-Grundkörper G ein weiterer Schalenkörper N aufgebracht (aus dem gleichen oder einem anderen Metall wie der Schalen-Grundkörper), so daß mehrere in Längsrichtung durchgehende Hohlkanäle 5 begrenzt werden. Für den Faserverbundkunststoff bestehenden Schalen-Grundkörper erhöht ein aus Metall bestehender Schalenkörper N nicht nur die Gestaltfestigkeit, sondern wird auch ein hervorragender Abriebschutz erzielt, insbesondere in den Randbereichen und wie bei V angedeutet.

In zumindest einen der Hohlkanäle 5 ist ein längsverlaufender Versteifungseinsatz R eingepaßt, beispielsweise ein Rohrprofil 9, das bei 10 mit dem Schalenkörper N und, zweckmäßigerweise, auch mit dem Schalen-Grundkörper G verbunden ist. Ein derartiger Versteifungs-Einsatz R könnte in jedem Hohlkanal 5 vorgesehen werden. Der Versteifungs-Einsatz R kann bei der Formung des Schalen-Grundkörpers G als Formkern benutzt werden, der die Formung seiner Längssicke unterstützt.

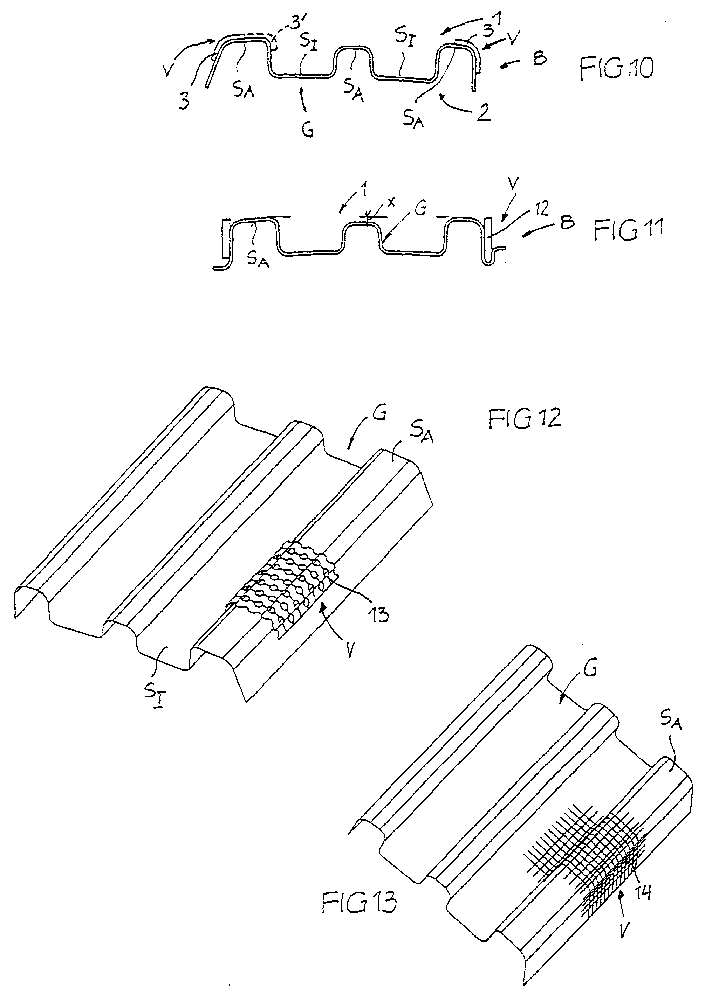

In Fig. 9 ist der Schalen-Grundkörper G aus Faserverbundkunststoff, mit dem Schalenkörper N kombiniert, der beispielsweise aus Metall oder Faserverbundkunststoff besteht, wiederum unter Formung längsdurchgehender Hohlkanäle 5. In zumindest einen Hohlkanal 5 ist als Versteifungseinsatz R ein Doppel-T-Profil 11 eingepaßt, dessen Mittelsteg in Hochrichtung orientiert ist, während seine beidendigen Querstege am Grund einer Längssicke bzw. an der Unterseite des Schalenkörpers N anliegen. Es ist zweckmäßig, den Versteifungs-Einsatz R als Formkern beim Preßformen des Schalen-Grundkörpers G zu benutzen. Im Verbindungsbereich können Randflansche 4 vorgesehen sein.

Der einschalig oder mehrschalig ausgebildete Überrollbügel könnte zumindest bereichsweise vollständig mit einem elastischen Überzug aus Schaumstoff oder Elastomer oder einer Polsterung versehen sein (nicht gezeigt), z.B. damit die technische Struktur des Überrollbügels kaschiert und der Überrollbügel gestaltungstechnisch und ästhetisch ansprechend in die Fahrzeugkarosserie integrierbar ist.

In Fig. 10 ist der Schalen-Grundkörper G beispielsweise gemäß Fig. 3 mit einem Abriebschutz V versehen, beispielsweise mit längsverlaufenden Profilen 3 aus Metall oder einem anderem abriebfesten Material wie Kunststoff oder Mischformen dieser Materialien, und zwar zweckmäßigerweise an zur Bügelaußenseite und zu den Querschnittsrändern weisenden Oberflächenbereichen, die bei einem Überschlag des Fahrzeuges mit dem Grund bzw. Hindernissen in Reibkontakt gelangen können. Die Profile 3 können an die Randkonturen des Schalengrundkörpers G angeschmiegt sein, und gegebenenfalls, gestrichelt bei 3' angedeutet, aus Gründen einer besseren Verbindung um mehrere Kantenbereiche der Längssicken herumgreifen.

In Fig. 11 ist an dem Schalen-Grundkörper G des Überrollbügels B, z.B. annähernd entsprechend Fig. 3, als Abriebschutz V an jeder Querschnittsaußenseite ein Längsprofil 12 festgelegt, das am Schalen-Grundkörper G angehaftet oder sogar eingeklemmt ist.

Die Profile 3, 3' bzw. 12 können über die gesamte Länge des Bügels durchgehen oder sich nur in Bereichen erstrecken, in denen der Überrollbügel bei einem Überschlag Reibkontakt erfährt. Fig. 11 verdeutlicht ferner, daß die beiden äußeren, zur Bügelaußenseite 1 erhabenen Längssicken S_{A} zur Bügelaußenseite um ein Höhenmaß x höher sind als die mittlere Längssicke S_{A}, so daß bei einem Überschlag nur die mit dem Abriebschutz versehenen Längssicken Reibkontakt erfahren. Ferner hat die unterschiedliche Höhe der Längssicken eine Funktion im Hinblick auf die belastungsorientierte Kraftaufnahme im Überrollbügel.

In Fig. 12 ist als Abriebschutz V ein Lochblech oder Streckblech aus abriebfestem Kunststoff und/oder Metall auf die nach außen erhabenen Längssicken S_{A} des Schalen-Grundkörpers G aufgebracht und stoffschlüssig oder formschlüssig, z.B. ohne Nieten angehaftet. Gegebenenfalls ist dieser Abriebschutz V sogar in die Oberfläche eingebettet.

In Fig. 13 ist der Abriebschutz V ein Drahtgeflecht oder Maschengewebe 14, das zweckmäßigerweise in die Oberfläche des Schalen-Grundkörpers G eingebettet und auf diese Weise stoffschlüssig mit dem Überrollbügel B verbunden ist. Es wird ein Formschluß zwischen der Kunststoffmatrix des als Preßformteil aus Faserverbundkunststoff gebildeten Schalen-Grundkörpers und dem Abriebschutz erzielt, was Masse- und Klemmgewicht spart.

Der Schalen-Grundkörper G und die weiteren Schalen-Grundkörper N, gegebenenfalls auch die Versteifungseinsätze R, sind zweckmäßigerweise FaserverbundkunstStoff-Preßformteile. Es ist allerdings denkbar, die weiteren Komponenten aus metallischen flächigen Werkstoffen, z.B Stahl- oder Leichtmetallblech, herzustellen, oder Mischformen zu wählen, in denen unterschiedliche Materialien kombiniert sind. Der verwendete Faserverbundkunststoff K besteht aus in eine Kunststoffmatrix eingebetteten Fasergewebelagen, wobei die Gewebelagen beispielsweise Glas-, Kohlenstoff- oder Aramidfasem oder Mischgewebe, jeweils mit Schuß- und Kettfäden enthalten. Die Kunststoffmatrix könnte ein thermoplastischer oder duroplastischer Kunststoff sein, z.B. Polyamid PP oder PET. Die Komponenten werden aus mit Kunststoff imprägnierten Gewebelagen in Form von Prepregs thermisch geformt. Dabei können die Befestigungsanschlüsse A (Fig. 2) von vomherein eingeformt werden. Die Größe der Längssicken nimmt in Richtung zu den Endabschnitten E allmählich zu, zweckmäßig ausgehend von den Übergängen vom Mittelabschnitt M in die Endabschnitte E.

Moderne Fertigungstechniken in Verbindung mit vorgreifenden FEM-Berechnungen ermöglichen eine exakt belastungsorientierte Formung des Überrollbügels bzw. seiner Komponenten, die ihn an die Anforderungen der Fahrzeughersteller für Hauptbelastungesfälle wie Druck und Biegung anpassen, ohne eine nicht nutzbare Überdimensionierung in Kauf zu nehmen. Durch konsequente Nutzung der Vorteile der Schalenbauweise und des dabei verwendeten Materials ergibt sich eine beträchtliche Gewichtseinsparung, wodurch im Fahrzeug einfachere Befestigungseinrichtungen und/oder leichtere, weil schwächere, Antriebsmechanismen zum Ausfahren und Verriegeln des Überrollbügels einsetzbar sind. Dank des geringen Gewichtes des Überrollbügels wird eine unerwünschte Massen-Konzentration in hochliegenden Fahrzeugbereichen vermieden. Die Längssicken werden so strukturiert und geformt, daß der Überrollbügel den Belastungsanforderungen optimal gewachsen ist. Speziell im Schalen-Grundkörper ist nur exakt die Materialmasse enthalten, die zum Aufnehmen der Belastungen erforderlich ist, d.h. es wird so viel Gewicht eingespart wie möglich. Der Abriebschutz kann einen energieaufzehrenden Verformungsbereich definieren, der hauptsächlich Reibungsbelastungen aufnimmt und aufzehrt, so daß die Belastungseigenschaften des Überrollbügels für Druck- und Biegebelastungen durch den Abrieb nicht leiden. Die Längssicken werden mit Formen gebildet, die bei minimalem Materialeinsatz eine gleichmäßige Lastverteilung und genau vorherbestimmte Belastungsaufnahme gewährleisten und auch die Lastübertragung an die Befestigungsstellen im Fahrzeug vertragen. Die Kett- und/oder Schußfäden in den Gewebelagen des Faserverbundkunststoffes können auf die Hauptbelastungsrichtungen ausgerichtet werden, um bestimmte Belastungsaufnahmeverhalten zu erzielen.

Die Formung des Schalen-Grundkörpers G erfolgt in einer erwärmten Preßform aus einem im wesentlichen flachen Zuschnitt unter Einwirkung von Druck und Temperatur an dem vorgewärmten und gegebenenfalls aus mehreren Lagen bestehenden Zuschnitt. Durch das Pressen werden die Gewebelagen in die Kunststoffmatrix eingebettet. Bei einer mehrschaligen Bauweise können die einzelnen Schalen miteinander verklebt oder verschweißt sein. Der Abriebschutz kann ebenfalls durch Kleben oder Verschweißen angehaftet werden oder durch zusätzliche Befestigungselemente fixiert sein. Ein nicht gezeigter Überzug des Überrollbügels kaschiert nicht nur den technischen Charakter, sondern hat sicherheitstechnische Vorteile und kann als Witterungsschutz dienen. Der Abriebschutz dient gegebenenfalls als zu opfernde Verformungszone bei der Aufzehrung der Reibenergie, um beispielsweise den Schalen-Grundkörper gegen einen seine Belastungssaufnahme beeinträchtigenden Abrieb solange wie möglich zu schützen.

Anstelle eines thermischen Umformverfahrens (Pressen) kann auch das Handlaminier-, das RTM- oder das SMC-VErfahren zur Herstellung der Komponenten aus Faserverbundkunststoff, angewandt werden.

## Patentansprüche

1. Überrollbügel für ein Kraftfahrzeug, insbesondere für einen offenen Sportwagen, der sich mit einem Mittelabschnitt (M) und davon abgebogenen Endabschnitten (E) in einer Bügelhauptebene (H) quer zur Fahrzeuglängsrichtung und in etwa über die Fahrzeugbreite erstreckt und endseitige Befestigungsanschlüsse (A) aufweist, wobei der Überrollbügel einen flachen Querschnitt mit einer quer zur Bügelhauptebene (H) ausgerichteten Querschnitts-Hauptachse (Q) und einen der Bügelform folgenden Schalen-Grundkörper (G) aus verformten flächigem Material mit über die Längserstreckung des Überrollbügels in etwa gerade durchgehenden, abwechselnd zur Bügelaußen- und -innenseite (1, 2) erhabenen Längssicken (S, S_{A}, Sₗ) aufweist, die im Querschnitt des Überrollbügels (B) einen Mäander- oder Schlangenlinien-Querschnittsverlauf definieren, **dadurch gekennzeichnet, dass** der Schalen-Grundkörper (G) eine einstückig aus Faserverbundkunststoff (K) pressgeformte Schale ist, und **dass** die durch ihre Weite und/oder Höhe definierte Größe zumindest einer der Längssicken (S_{A}, Sₗ) in Richtung zum Überrollbügel-Ende am Befestigungsanschluss (A) allmählich zunimmt.

2. Überrollbügel nach Anspruch 1, **dadurch gekennzeichnet, dass** die Größe zumindest einer der Längssicken ab dem Übergang vom Mittelabschnitt (M) in den Endabschnitt (E) zunimmt.

3. Überrollbügel nach Anspruch 1, **dadurch gekennzeichnet, dass** der Schalen-Grundkörper (G) im Faserverbundkunststoff (K) in eine Kunststoffmatrix eingebettete Fasertextillagen aufweist, und dass das Textil des Faserverbundkunststoffes aus Glas-, Kohlenstoff-, Aramidfasem oder Mischfasem besteht.

4. Überrollbügel nach Anspruch 3, **dadurch gekennzeichnet, dass** das Textil ein Gewebe, Gelege, Gewirk, Geflecht oder eine Kombination daraus ist.

5. Überrollbügel nach Anspruch 3, **dadurch gekennzeichnet, dass** die Kunststoffmatrix ein thermoplastischer oder duroplastischer Kunststoff ist, vorzugsweise Polyamid, PP oder PET.

6. Überrollbügel nach Anspruch 1, **dadurch gekennzeichnet, dass der Schalen**-Grundkörper (G) durch thermisches Umformen von mit Kunststoff imprägnierten Prepregs geformt ist.

7. Überrollbügel nach Anspruch 1, **dadurch gekennzeichnet, dass** zumindest zwei zur Bügelaußenseite erhabene Längssicken (S_{A}) und dazwischen eine zur Bügelinnenseite (2) erhabene Längssicke (S_{A}, l) vorgesehen sind.

8. Überrollbügel nach Anspruch 1, **dadurch gekennzeichnet, dass** insgesamt drei zur Bügelaußenseite erhabene Längssicken (S_{A}) vorgesehen sind, und dass davon die mittlere Längssicke (S_{A}) niedriger ist als die äußeren Längssicken.

9. Überrollbügel nach Anspruch 1, **dadurch gekennzeichnet, dass** am Schalen-Grundkörper (G) an der Bügeläußen- und/oder -innenseite (1, 2) wenigstens ein weiterer Schalenkörper (N) angeordnet ist, der mit wenigstens einer Längssicke (S_{A}, Sₗ), des Schalen-Grundkörpers (G) einen geschlossenen Hohlkanal (5) definiert, und **dass** der weitere Schalenkörper (N) mit seinem Querschnitt in etwa spiegelbildlich zum Schalen-Grundkörper (G) ausgebildet und an diesem spiegelbildlich angebracht ist.

10. Überrollbügel nach Anspruch 9, **dadurch gekennzeichnet, dass in dem wenigstens** einen Hohlkanal (5) ein über zumindest einen Teil von dessen Längserstreckung durchgehender Versteifungseinsatz (R) eingepasst ist, der aus dem gleichen Material wie oder einem anderen Material als der Schalen-Grundkörper (G) besteht.

11. Überrollbügel nach Anspruch 10, **dadurch gekennzeichnet, dass** der Versteifungseinsatz (R) ein Profilstrang ist, vorzugsweise ein Rohr- oder Doppel-T-Profilstrang (9, 11).

12. Überrollbügel nach wenigstens einem der vorhergehenden Ansprüche, **dadurch gekennzeichnet dass** ein zur Bügelaußenseite (1) weisender Abriebschutz (V) aus abriebfestem Material wie Metall und/oder Kunststoff vorgesehen ist, vorzugsweise ein längsverlaufendes Profil (3, 3', 12).

13. Überrollbügel nach Anspruch 12, **dadurch gekennzeichnet, dass** der Abriebschutz (V) aus einem Geflecht, einem Lochblech, einem Streckblech oder einer Faser- oder Drahtarmierung (13, 14) aus Metall und/oder Kunststoff besteht, und stoffschlüssig mit dem Überrollbügel (B) verbunden, vorzugsweise sogar in dessen Oberfläche eingebettet, ist.

## Claims

1. A rollbar for automotive vehicle, in particular for an open sports car, which extends with a centre section (M) and end sections (E) bent from said centre section in a main rollbar plane (H) in a direction transverse to the longitudinal direction of said vehicle and approximately over the width of said vehicle, and which comprises fastening connections (A) at the ends, said rollbar having a flat cross-section with a cross-section main axis (Q) oriented in a direction transverse to the main rollbar plane (H) and a basic shell body (G) following the rollbar shape and consisting of moulded two-dimensional material with longitudinal ribbings (S, S_{A}, Sₗ) which extend approximately in straight fashion over the longitudinal extension of said rollbar and are alternately raised towards the exterior and interior side (1, 2) of said rollbar and which define a meander or serpentine-like cross-sectional contour within the cross-section of said rollbar (B), **characterised in that** that said basic shell body (G) is a shell integrally press-moulded from fibrous composite plastics (K), and that the size defined by the width and/or height of at least one of said longitudinal ribbings (S_{A}, Sₗ) gradually increases in the direction towards the rollbar end at the fastening connection (A).

2. A rollbar according to claim 1, **characterised in that** the size of at least one of the longitudinal ribbings begins to gradually increase from the transition from the centre section into the end section.

3. Rollbar according to claim 1, **characterised in that** said basic shell body (G) comprises fibre textile layers embedded in said fibrous composite plastics (K) in a plastic matrix, and that the textile of said fibrous composite plastics consists of glass, carbon, aramide fibres or compound fibres.

4. Rollbar according to claim 3, **characterised in that** said textile is a fabric, a laid structure, a knit, a braid or a combination thereof.

5. Rollbar according to claim 3, **characterised in that** said plastic matrix is a thermoplastic or duroplastic plastic material, preferably polyamide, PP or PET.

6. Rollbar according to claim 1, **characterised in that** said basic shell body (G) is formed by thermal moulding of plastic-impregnated prepregs.

7. Rollbar according to claim 1, **characterised in that** there are provided at least two longitudinal ribbings (S_{A}) raised to the outer rollbar side and one longitudinal ribbing (S_{A}, Sₗ) in-between the one ribbing being raised to the rollbar inner.

8. Rollbar according to claim 1, **characterised in that** a total of three longitudinal ribbings (S_{A}) raised towards the exterior side of said rollbar are provided, and that the central longitudinal ribbing (S_{A}) is lower than the outer longitudinal ribbings.

9. Rollbar according to claim 1, **characterised in that** at least one further shell body (N) which defines a closed hollow channel (5) with at least one longitudinal ribbing (S_{A}, Sₗ) is arranged on the basic shell body (G) on the exterior and/or interior side (1, 2) of said rollbar, and that said further shell body (N) with its cross-section is arranged approximately mirror-inverted relative to said basic shell body (G) and is mounted mirror-inverted at said basic shell body (G).

10. Rollbar according to claim 9, **characterised in that** the at least one hollow channel (5) has fitted therein a stiffening insert (R) which extends over at least part of the longitudinal extension thereof and which consists of the same material as or of a material differing from that of said basic shell body (G).

11. Rollbar according to claim 10, **characterised in that** said stiffening insert (R) is a profile strand, preferably a tub or a double-T-strand (9, 11).

12. Rollbar according to at least one of the preceding claims, **characterised in that** there is provided an anti-abrasion means (V) of abrasion-resistant material such as metal and/or plastics, which is oriented towards the exterior side (1) of said rollbar, preferably a longitudinally extending profile (3, 3', 12).

13. Rollbar according to claim 12, **characterised in that** said anti-abrasion means (V) consists of a braiding, a perforated sheet, a stretched sheet or a fibre or wire reinforcement (13, 14) of metal and/or plastic, and is integrally connected to said rollbar (B), preferably is embedded into the surface of the rollbar.

## Revendications

1. Arceau de sécurité pour un véhicule automobile, en particulier pour une voiture de sport ouverte, s'étendant, par un tronçon central (M) et des tronçons d'extrémité (E) , partant de lui en coude, dans un plan principal d'arceau (H), transversalement à la direction longitudinale du véhicule et à peu près sur toute la largeur du véhicule, et présentant des raccordements de fixation (A) extrêmes, l'arceau de sécurité présentant une section transversale plate avec un axe principal de section transversale (Q) orienté perpendiculairement au plan principal d'arceau (H) et un corps de base formé en coque (G), qui suit la forme de l'arceau, réalisé en matériau plat ayant été formé avec des moulures longitudinales (S, S_{A}, S_{I}) s'étendant de façon continue, à peu près rectiligne, sur l'étendue longitudinale de l'arceau, en relief, en alternance en direction de la face extérieure et intérieure de l'arceau (1, 2), les moulures définissant, en vue en coupe transversale de l'arceau de sécurité (B), une allure de section transversale qui suit une ligne en méandre ou en serpentin, **caractérisé en ce que** le corps de base formé en coque (G) est une coque obtenue par emboutissage d'une seule pièce, en une matière synthétique composite renforcée par des fibres (K), et **en ce que** la taille, définie par sa largeur et/ou sa hauteur, d'au moins l'une des moulures longitudinales (S_{A}, S_{I}), va en augmentant progressivement dans la direction de l'extrémité d'arceau de sécurité sur le raccordement de fixation (A).

2. Arceau de sécurité selon la revendication 1, **caractérisé en ce que** la taille d'au moins l'une des moulures longitudinales va en augmentant, à partir de la transition entre le tronçon central (M) et le tronçon d'extrémité (E).

3. Arceau de sécurité selon la revendication 1, **caractérisé en ce que** le corps de base en coque (G) présente, dans la matière synthétique composite renforcée par des fibres (K), des couches de textile à base de fibres, noyées dans une matrice de matière synthétique, et **en ce que** le textile de la matière synthétique composite renforcée par des fibres est formée de fibres de verre, de carbone, de fibres d'aramide ou de fibres mixtes.

4. Arceau de sécurité selon la revendication 3, **caractérisé en ce que** le textile est tissu, un assemblage de couches, un tricot, un tressage ou une combinaison de ceux-ci.

5. Arceau de sécurité selon la revendication 1, **caractérisé en ce que** la matrice de matière synthétique est une matière synthétique thermoplastique ou thermodurcissable, de préférence du polyamide, du PP ou du PET.

6. Arceau de sécurité selon la revendication 1, **caractérisé en ce que** le corps de base formé en coque (G) est façonné par reformage thermique de préimprégnés, imprégnés par de la matière synthétique.

7. Arceau de sécurité selon la revendication 1, **caractérisé en ce qu'**au moins deux moulures longitudinales (S_{A}), en relief en direction de la face extérieure de l'arceau, et, en position intercalaire, une moulure longitudinale (S_{A}, S_{I}) en relief en direction de la face intérieure de l'arceau (2), sont prévues.

8. Arceau de sécurité selon la revendication 1, **caractérisé en ce qu'**un total de trois moulures longitudinales (S_{A}) en relief en direction de la face extérieure de l'arceau sont prévues et que, parmi celles-ci, la moulure longitudinale (S_{A}) centrale est plus basse que les moulures longitudinales extérieures.

9. Arceau de sécurité selon la revendication 1, **caractérisé en ce que**, sur le corps de base formé en coque (G), sur la face extérieure et/ou intérieure d'arceau (1, 2), est disposé au moins un autre corps formé en coque (N), qui, avec au moins une moulure longitudinale (S_{A}, S_{I}) , du corps de base formé en coque (G) , définit un canal creux (5) fermé, et **en ce que** l'autre corps formé en coque (N) est réalisé avec une section transversale répondant à peu près à une symétrie spéculaire par rapport au corps de base formé en coque (G) et est monté sur celui-ci de façon à répondre à une symétrie spéculaire.

10. Arceau de sécurité selon la revendication 9, **caractérisé en ce que**, dans le au moins un canal creux (5) est ajusté un insert de rigidification (R), traversant au moins une partie de son étendue longitudinale, insert formé du même matériau ou d'un autre matériau que celui du corps de base formé en coque (G).

11. Arceau. de sécurité selon la revendication 10, **caractérisé en ce que** l'insert de rigidification (R) est une barre profilée, de préférence une barre profilée en forme de tube ou de double T (9, 11) .

12. Arceau de sécurité selon au moins l'une des revendications précédentes, **caractérisé en ce qu'**une protection à l'abrasion (V), tournée vers la face extérieure des treillis (1), réalisée dans un matériau résistant à l'abrasion, tel que du métal et/ou un matière synthétique, est prévue, de préférence un profilé (3, 3', 12) s'étendant longitudinalement.

13. Arceau de sécurité selon la revendication 12, **caractérisé en ce que** la protection à l'abrasion (V) est formée d'un treillis, d'une tôle perforée, d'une tôle étirée ou d'une armature à fibres ou à fils (13, 14), en métal et/ou en. matière synthétique, et est reliée par encastrement à l'arceau de sécurité (B), de préférence même en étant noyée dans sa surface.
